Europäisches Patentamt

European Patent Office

Office européen des brevets

(19)

(11) **EP 1 394 124 A1**

(12) **EUROPEAN PATENT APPLICATION**
published in accordance with Art. 158(3) EPC

(43) Date of publication:
**03.03.2004 Bulletin 2004/10**

(51) Int Cl.$^7$: **C03B 23/045**

(21) Application number: **03701720.9**

(22) Date of filing: **15.01.2003**

(86) International application number:
**PCT/JP2003/000239**

(87) International publication number:
**WO 2003/059828 (24.07.2003 Gazette 2003/30)**

(84) Designated Contracting States:
**AT BE BG CH CY CZ DE DK EE ES FI FR GB GR HU IE IT LI LU MC NL PT SE SI SK TR**

(30) Priority: **17.01.2002 JP 2002009231**
**30.01.2002 JP 2002022566**
**30.01.2002 JP 2002022444**
**05.02.2002 JP 2002028779**
**17.04.2002 JP 2002115432**
**10.07.2002 JP 2002201174**
**10.07.2002 JP 2002201861**
**09.08.2002 JP 2002233926**

(71) Applicant: **Sumitomo Electric Industries, Ltd.**
**Osaka-shi, Osaka 541-0041 (JP)**

(72) Inventors:
• **TANADA, Haruyoshi, Sumitomo Electric Ind., Ltd**
**Yokohama-shi, Kanagawa 244-8588 (JP)**
• **NAKAMURA, Motonori,**
**Sumitomo Electric Ind., Ltd**
**Yokohama-shi, Kanagawa 244-8588 (JP)**

• **OHGA, Yuichi, Sumitomo Electric Ind., Ltd**
**Yokohama-shi, Kanagawa 244-8588 (JP)**
• **ENOMOTO, Tadashi, Sumitomo Electric Ind., Ltd**
**Yokohama-shi, Kanagawa 244-8588 (JP)**
• **HIRANO, Masaaki, Sumitomo Electric Ind., Ltd**
**Yokohama-shi, Kanagawa 244-8588 (JP)**
• **ONISHI, Masashi, Sumitomo Electric Ind., Ltd**
**Yokohama-shi, Kanagawa 244-8588 (JP)**
• **SOMA, Kazuyuki, Sumitomo Electric Ind., Ltd**
**Yokohama-shi, Kanagawa 244-8588 (JP)**
• **MORIYA, Tomomi, Sumitomo Electric Ind., Ltd**
**Yokohama-shi, Kanagawa 244-8588 (JP)**
• **YANADA, Eiji, Sumitomo Electric Ind., Ltd**
**Yokohama-shi, Kanagawa 244-8588 (JP)**

(74) Representative: **Grünecker, Kinkeldey,**
**Stockmair & Schwanhäusser Anwaltssozietät**
**Maximilianstrasse 58**
**80538 München (DE)**

(54) **METHOD AND DEVICE FOR MANUFACTURING GLASS TUBE**

(57) The present invention relates to a method of making a glass tube. In the method, a diameter expanding member is inserted through a hole in a tubular glass blank so as to expand the diameter of the hole while the temperature of the glass blank is controlled to be more than or equal to the softening point. The tubular glass blank may be a purchased product or a self-made product. In the above-mentioned method of making a glass tube, the diameter of the hole in the glass blank may be expanded while at least the rear end of the diameter expanding member is supported. The diameter of the hole in the glass blank may be expanded while both ends of the diameter-expanding member are supported. The present invention also relates to an apparatus for manufacturing a glass tube. The apparatus comprises a heating member for heating a tubular glass blank at its circumference, a diameter expanding member capable of being inserted through the glass blank, support members supporting both ends of the diameter expanding member, and a device for moving the diameter expanding member relative to the glass blank so as to insert the diameter expanding member through the hole in the glass blank.

EP 1 394 124 A1

**Description**

Technical Field

The present invention relates to a method of making a glass tube by inserting a diameter-expanding member through a softened glass blank.

Background Art

Japanese Patent No. 2798465 discloses a method of making a cylinder made of quartz glass. In this method the end of a columnar quartz glass rod is softened by heating, a pointed tip of a boring member is engaged with the central portion of the end surface, and the outer edge of the end of the glass rod is extracted while being rotated with respect to the boring member.

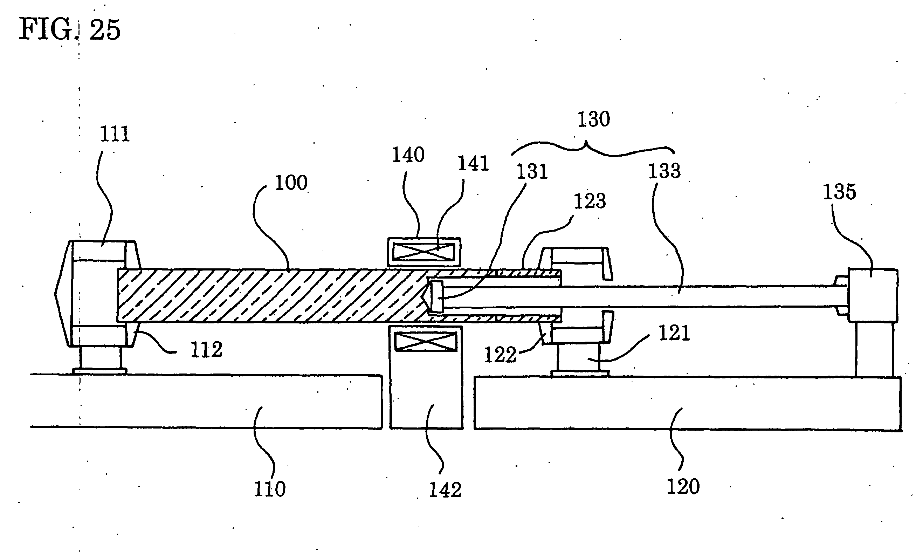

In this method, as shown in Fig. 25, a glass rod 100 made of quartz is prepared, and is rotated while the outlet side is supported with a dummy cylinder 123. The circumference of the end of the glass rod 100 is softened by heating with a heater 141 mounted on a heating device 140, and a boring member 130, e.g. a bit 131, is brought into contact with the central portion of the end surface. Here, one end of the glass rod 100 is fixed to a chuck 112 of a first feed table 111 and the other end is fixed to a chuck 122 of a second feed table 121 with the dummy cylinder 123 therebetween. These first and second feed tables 111 and 121 are attached to an inlet-side base 110 and an outlet-side base 120 respectively. The bit 131 of the boring member 130 is fixed to the outlet-side base 120 by the fixing member 135 with a support rod 133 therebetween, and thereby, a cantilever type diameter-expanding member is constructed.

Japanese Patent Application Publication No. 7-109135 discloses another method of making a large quartz glass tube. In this method the center of a large quartz glass ingot is bored by a hot carbon drill press-in method, and precise external grinding is performed to achieve an outer diameter of 50 to 300 mm, an outer diameter / inner diameter ratio of 1.1 to 7, a thickness of 10 mm or more and an error in thickness of 2% or less. Japanese Patent Application Publication No. 61-168544 discloses another method of making a transparent glass tube. In this method glass particulate material is deposited on a starting material, the starting material is extracted so as to prepare a pipe-shaped deposit body, and the resulting pipe-shaped deposit body is heat-treated to produce a transparent glass tube.

Disclosure of Invention

In the method of making a glass tube according to the present invention, a diameter expanding member is inserted through a hole in a tubular glass blank so as to expand the diameter of the hole while the temperature of the glass blank is controlled to be more than or equal to the softening point. The tubular glass blank may be a purchased product or a self-made product. The diameter of the hole in the glass blank may be expanded while at least the rear end of the diameter expanding member is supported. The diameter of the hole in the glass blank may be expanded while both ends of the diameter-expanding member are supported.

Furthermore, the present invention relates to an apparatus for making a glass tube, which apparatus includes a heating member for heating a tubular glass blank at the circumference, a diameter expanding member capable of being inserted through the glass blank, support members supporting both ends of the diameter expanding member, and a device for moving the diameter expanding member relative to the glass blank in order to insert the diameter expanding member through the hole in the glass blank.

The present invention is further explained below by referring to the accompanying drawings. The drawings are provided solely for the purpose to illustration and are not intended to limit the scope of the invention.

Brief Description of the Drawings

Figure 1 is a view for illustrating a method of making a glass blank used in a first embodiment of the present invention.
Figure 2 is a view showing the state in which a diameter-expanding member is engagedly in contact with an alignment concavity provided on the end surface of a glass blank.
Figure 3 is a view for illustrating an eighth embodiment of the present invention.
Figure 4 is a view for illustrating a method in which a glass tube is manufactured while a glass blank is supported from the exterior.
Figure 5 is a view for illustrating a method of making a glass blank used in the first embodiment of the present invention.

Figure 6 is a view for illustrating a method of making a glass blank used in the first embodiment of the present invention.

Figure 7 is a view for illustrating a glass blank used in the first embodiment of the present invention.

Figure 8 is a view for illustrating the first embodiment of the present invention.

Figure 9 is a view for illustrating the first embodiment of the present invention.

Figure 10 is a diagram for illustrating the eccentricity.

Figure 11 is a view for illustrating a glass blank used in a second embodiment of the present invention.

Figure 12 is a view for illustrating the second embodiment of the present invention.

Figure 13 is a view for illustrating another method of making a glass blank used in the first embodiment of the present invention.

Figures 14(a) to 14(c) are views for illustrating a method of boring a solid glass ingot with a carbon drill. Figure 14 (a) is a view showing the state in which a holding pipe is connected to both ends of the glass ingot, Fig. 14(b) is a view showing the state in which the carbon drill is in contact with one end of the glass ingot, and Fig. 14(c) is a view showing the state in which the carbon drill is penetrating the glass ingot.

Figure 15 is a view for illustrating a method of making a glass blank used in a fifth embodiment of the present invention.

Figure 16 is a view showing an example of a tool used for a borer.

Figure 17 is an enlarged view showing a portion at which a diameter expanding member is in contact with a glass blank in the eighth embodiment of the present invention.

Figure 18 is a view for illustrating the eighth embodiment of the present invention.

Figure 19 is a view showing an example of a diameter expanding member and a support member.

Figure 20 is a view showing another example of a diameter expanding member and a support member.

Figure 21 is a view for illustrating a diameter expanding member and a front-end support member used in the eighth embodiment of the present invention.

Figure 22 is a view for illustrating a ninth embodiment of the present invention.

Figure 23 is an enlarged view showing a portion at which a fixing member and a front-end support member slide in the ninth embodiment of the present invention.

Figure 24 is a view for illustrating a tenth embodiment of the present invention.

Figure 25 is a view for illustrating a conventional method.

Best Mode for Carrying out the Invention

Embodiments of the present invention are explained below by referring to the accompanying drawings. In the drawings, the same number refers to the same part to avoid duplicate explanation. The ratios of the dimensions in the drawings do not necessarily coincide with the explanation.

In the present invention relating to a method of making a glass tube, a diameter expanding member is inserted through a hole in a tubular glass blank so as to expand the diameter of the hole while the temperature of the glass blank is controlled to be more than or equal to the softening point. According to this configuration, the diameter expanding member encounters significantly reduced resistance compared with that in the method in which a boring member, e.g. a carbon drill, is inserted through a solid rod-shaped glass blank so as to manufacture a glass tube, and deviation of the trajectory of the diameter expanding member from the center of the hole in the glass blank can be restrained. That is, the eccentricity of the hole in the glass tube can be reduced. Furthermore, no excessive force is applied to the diameter expanding member and the glass blank, and therefore, the probability of breakage thereof is reduced as well.

The tubular glass blank may be a purchased product or a self-made product. The tubular glass blank may be produced by boring into a glass rod or by molding into a tube. Glass particulate material may be deposited around a rod, and the rod may be extracted, followed by consolidation, to produce a tubular glass blank. Glass particulate material may be deposited around a glass tube having a relatively small diameter, as a starting blank, and consolidation may be performed to produce a tubular glass blank. Either a VAD method or an OVD method may be applied for depositing the glass particulate material.

The tubular glass blank may be produced in a manner such that glass particulate material is deposited around an extraction rod to form a glass particulate deposit body, the extraction rod is extracted from the glass particulate deposit body to form a hollow body, and the hollow body is consolidated. Here, even if the hole in the glass blank is flattened due to the occurrence of uneven shrinkage, the hole can be made circular, allowing the non-circularity to be reduced, when the hole is expanded with a diameter expanding member in a latter step. Even if the interior surface of the hole in the hollow body is scratched by extracting the extraction rod, the flaw can be eliminated when the hole of the glass blank is expanded in a following step.

Desirably, a target rod is constructed from an extraction rod and glass rod, and the glass particulate material is deposited around the target rod. The extraction rod is made attachable to and detachable from the glass rod. Desirably, the extraction rod is composed of a material having a larger thermal expansion coefficient than that of the glass particulate material to be deposited on the rod. Examples of this material include carbon. The temperature of the glass particulate deposit body and the extraction rod reaches a few hundred to one thousand and several hundreds degrees centigrade during deposition of the glass particulate material. When this is cooled to substantially room temperature, a space is generated between the two due to the difference in the thermal expansion coefficients. In this state, the extraction rod can be extracted with ease, and the probability of occurrence of flaws on the interior surface of the hollow body is reduced. Desirably, the extraction rod is of a tapered shape.

Desirably,.the temperature during consolidation of the glass particulate deposit body is 1,400°C to 1,640°C. When the temperature is within this range, excellent consolidation and clarification can be achieved. In the case where the glass blank contains fluorine, gases in the glass particulate deposit body are exhausted sufficiently when heating is performed in the range of 1,400°C to 1,500°C in an inert gas atmosphere, and accordingly, a glass tube having high transparency can be produced. When the glass blank contains no fluorine, heating is performed preferably in the range of 1,500 °C to 1,600 °C in an inert gas atmosphere.

When the diameter-expanding member is inserted through the hole of the glass blank, the glass blank and the diameter expanding member may be rotated relative to each other. One or both of them may be rotated. When both of them are rotated, they may be rotated in the same, or opposite directions. Neither of them may be rotated, or both of them may be rotated in order that the relative rotation speed becomes zero.

A holding pipe may be connected to at least one end of the tubular glass blank, and the diameter of the hole in the glass blank may be expanded while the glass blank is supported through the holding pipe. When the glass blank is directly grasped, the surface of the grasped portion may be scratched or stained, the diameter of the hole of the grasped portion cannot be expanded, and the grasped portion may not become a conforming item. These problems can be overcome by the use of the holding pipe.

Although a holding pipe may be connected to one end only, it is desirable that holding pipes be connected to both ends so that the glass blank can be grasped with more stability such that the hole may be prevented from becoming eccentric or flat during the expansion of the hole diameter of the glass blank. When a glass rod remains at one end of the glass blank, preferably, the holding pipe is connected to the other end and both ends thus structured are grasped. The viscosity of the glass blank is $10^3$ to $10^{10,2}$ Pa·s during the expansion of the diameter of the hole in the glass blank, and if the holding pipe has a similar viscosity as the glass blank, the holding pipe has no self-deformation, and then the diameter expanding member can desirably be pushed in the holding pipe.

When the holding pipe is designed to have substantially the same inner diameter as the outer diameter of the diameter expanding member and is connected such that both of the holding pipe and the diameter expanding member become concentric, the holding pipe functions as a guide for the diameter expanding member during insertion of the diameter expanding member through the glass blank. This enables the center axis of the diameter expanding member and that of the glass blank to easily coincide with each other, and therefore, the eccentricity can be reduced with ease.

In the method of making a tubular glass blank from the glass particulate deposit body, fluorine may be added to the glass particulate deposit body. A compound containing fluorine may be supplied to the glass particulate deposit body during synthesis of the glass particulate material or during heating before consolidation in order to add fluorine to the glass particulate deposit body. When fluorine is added to the glass tube, a glass tube having a complex refractive index profile can be manufactured. Examples of compounds containing fluorine include $CF_4$, $C_2F_6$, $SiF_4$, and $SF_6$.

Desirably, the glass particulate deposit body is exposed to a chlorine-based gas atmosphere before or after the consolidation of the glass particulate deposit body in order to remove hydroxyl groups. The removal of the hydroxyl group may be performed either before or after extracting of the extraction rod as long as it is performed before consolidation. Examples of chlorine-based gases include an inert gas containing chlorine ($Cl_2$) or silicon tetrachloride ($SiCl_4$). The removal of the hydroxyl group results in a glass tube having excellent quality, in which no light absorption by the hydroxyl group occurs. In order to remove the hydroxyl group, the glass particulate deposit body is preferably heated to 1,000°C to 1,200°C. If less than 1,000°C, the removal of the hydroxyl group is insufficient, and if more than 1,200°C, a part of the glass particulate deposit body may begin to shrink.

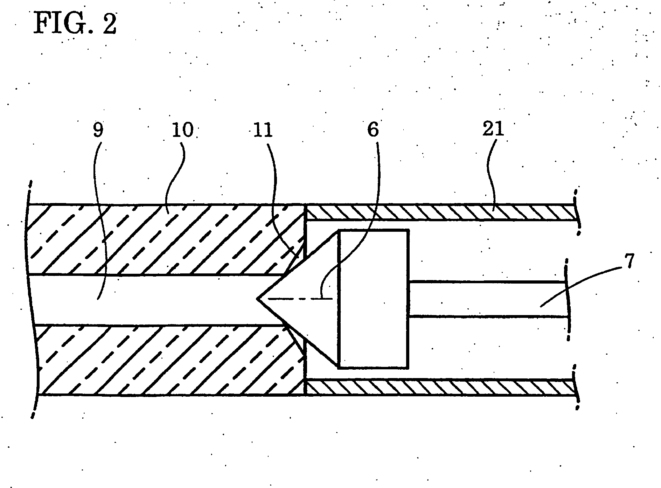

An alignment concavity capable of guiding the diameter-expanding member to a predetermined position may be provided on the end surface of the tubular glass blank. For example, as shown in Fig. 2, an alignment concavity 11 is provided on the outlet-side end surface of a tubular glass blank 10. The glass blank 10 is connected to a holding member 21 at the outlet-side end surface. A diameter expanding member 6 is supported with a support member 7, and is brought into contact with the concavity 11 of the glass blank 10, so that sliding in the direction perpendicular to the axis of the glass blank 10 is regulated. In this manner, the hole is prevented from becoming eccentric when the diameter of the hole in the glass blank 10 is expanded. Desirably, the alignment concavity is configured to enable it to guide the diameter-expanding member so that the axis of the diameter-expanding member coincides with the axis of the glass blank. The alignment concavity may be of a columnar shape, and is preferably of a tapered shape. It may be, for example, a circular truncated cone, a truncated pyramid, a part of a sphere or an oblate spheroid, and a curved surface resulting from rotation of a curved line.

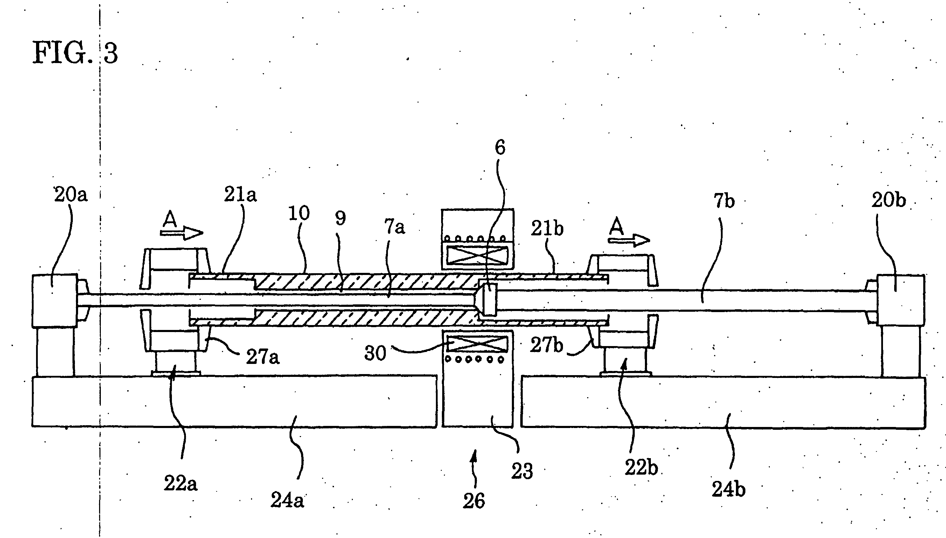

Desirably, the diameter of the hole in the glass blank is expanded while the diameter-expanding member is supported at both the ends thereof. A support member which has an outer diameter smaller than the hole diameter of the glass blank and which can be inserted through the hole in the glass blank is used for supporting the diameter expanding member at both the ends thereof. In order to support the diameter expanding member at both the ends thereof, as shown in Fig. 3, rod-shaped support members 7a and 7b may be attached respectively, to the front-end and rear end of the tapered shaped diameter expanding member 6, and the support members 7a and 7b may be supported with fixing members 20a and 20b. The diameter expanding member and the support members may be integrally molded into the shape of a partly bulged rod.

Holding pipes 21a and 21b are connected to both ends of a glass blank 10, and the holding pipes 21a and 21b are grasped with fixing members 22a and 22b respectively. One or both of the fixing members 20a and 20b and the fixing members 22a and 22b are moved on a base 24a or 24b, and thereby, the diameter expanding member 6 and the glass blank 10 are caused to move relative to each other, so that the diameter expanding member 6 is inserted through a hole 9 in the glass blank 10.

In order to control the temperature of the tubular glass blank to more than or equal to the softening point, heating is preferably performed by a heating device, e.g. an electric heater, provided around the glass blank. Here, the temperature is desirably controlled to be 1,300°C to 2,700°C. More desirably, the temperature is controlled to be 1,800°C to 2,600°C, or alternatively controlled to be, 1,300°C to 1,800°C. In particular, in the case where fluorine is added to the glass blank, the glass blank becomes too soft if more than 2,500°C, and therefore, is likely to sag. Consequently, the temperature is desirably controlled to be 2,500°C or less. When less than 1,800°C, the resistance becomes large during the insertion of the diameter expanding member, and the hole in the glass tube is likely to deviate from the center of the glass tube.

The shape of the diameter-expanding member can be appropriately changed. Desirably, the diameter-expanding member has a tapered tip and a cylindrical portion or columnar portion of a constant outer diameter. The hole whose diameter has been expanded by the diameter expanding member is not crushed or flattened, if the softened glass blank is cooled to the temperature of 1,500°C, desirably 1,000°C, at which the cross-sectional shape is self-sustained, while the softened glass blank is in contact with the columnar portion of the diameter expanding member. The length of the cylindrical portion or columnar portion is determined depending on the degree of cooling of the glass blank.

Desirably, the support member includes a diameter-shrinking portion where the outer diameter gradually decreases as it is distanced farther from the diameter-expanding member. When the support member includes the diameter-shrinking portion, the resistance applied to the diameter expanding member can be absorbed with the whole support member so as to decentralize the force, and therefore, concentration of the force onto the central portion of the support member can be avoided. Consequently, it is possible to prevent the hole from becoming eccentric due to bending of the support member when the diameter of the hole of the glass blank is expanded.

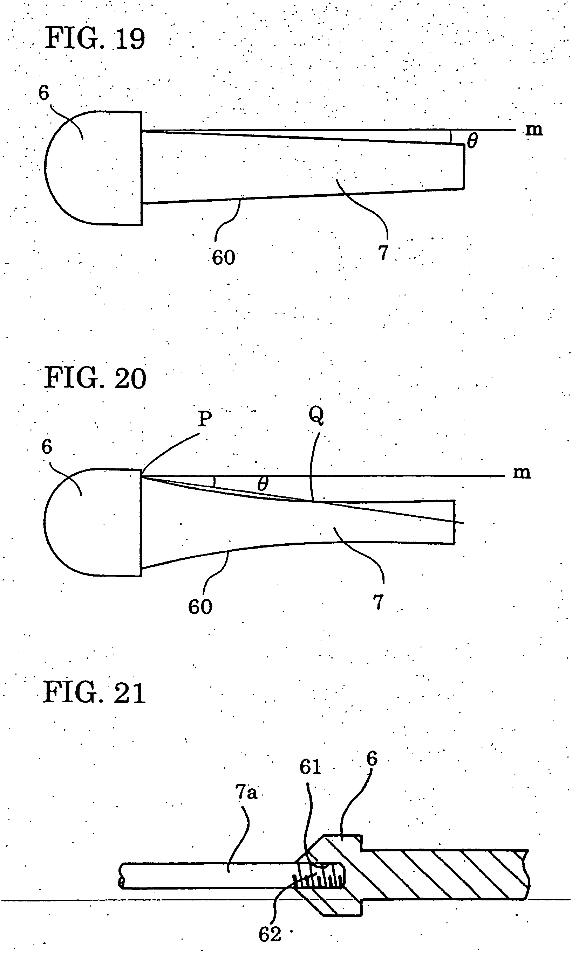

The circumferential side surface of the diameter-shrinking portion 60 may be of straight line in the cross section along the axis of the support member 7, as shown in Fig. 19, or be curved, as shown in Fig. 20. Preferably, the angle θ between the diameter-shrinking portion and the straight-line m parallel to the axis of the support member is 0.1 degrees or more, but 10 degrees or less. When the diameter-shrinking portion is represented by a straight line, as shown in Fig. 19 the angle between this straight line and the straight-line m may be controlled to be a value within the above-mentioned range. When the diameter-shrinking portion is represented by a curved line, the angle between the above-mentioned straight line m and the straight line drawn in the direction from point P, at which the diameter shrinking starts, and to point Q, at which the diameter shrinking terminates, in the sectional view as shown in Fig. 20 may be controlled to be a value within the above-mentioned range. The support members may be attached to both ends of the diameter-expanding member.

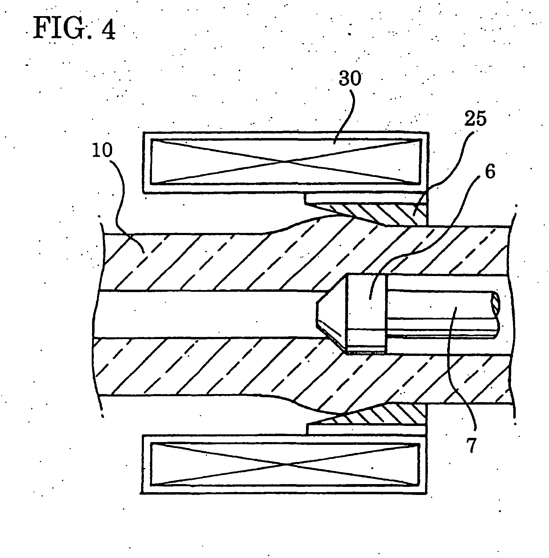

When the hole in the glass blank is expanded, the circumference of the glass blank 10 may be supported with a molding member 25, as shown in Fig. 4. In particular, when the temperature of the glass blank exceeds 1,800°C, it is desirable to provide such support. When exceeding 2,000°C, it is more desirable to provide support. A change in the external shape of the glass blank can be prevented by the molding member. The outer diameter of the glass tube can be controlled to the inner diameter of the molding member.

The molding member can be made by various means: flat plates arranged to have a predetermined spacing therebetween, a die including a hole having a circular cross section, plates with a groove having an arc-shaped cross section in accordance with the shape of the glass tube, or the like. When flat plates are used as the above-mentioned molding member, diameter expansion is desirably performed while the glass blank is rotated.

The diameter expanding member and the molding member preferably are made of a material which has low reactivity and which is unlikely to contaminate the glass tube. Examples thereof include graphite, high hardness carbon, silicon carbide (SiC), boron nitride (BN), and alumina. Graphite has excellent stability even at a high temperature at which glass softens, and has high electrical conductivity. Desirably, high-purity graphite having an impurity content of 1 ppm or less is used. Those coated with high-purity carbon (pyrolytic carbon), SiC, metal carbides or the like may be used. Examples of materials suited for metal carbides can include niobium carbide (NbC), tantalum carbide (TaC), titanium carbide (TiC) and zirconium carbide (ZrC). The diameter expanding member and the molding member are preferably made of a material having a purification-treated surface for the portion to be brought into direct contact with the glass.

FIRST EMBODIMENT

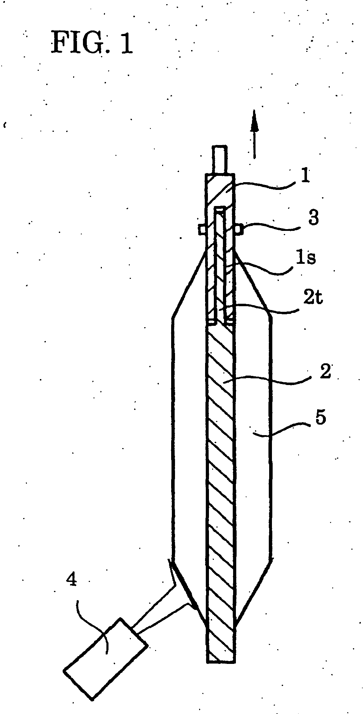

As shown in Fig. 1, a target rod is formed by inserting the fitting part 2t of an extraction rod 2 having an outer diameter of 20 mm and made of carbon through a slit 1s provided in a rod 1 made of silica glass and having an outer diameter of 20 mm and by fixing the fitting part 2t with a pin 3. The target rod is mounted in a deposition chamber, and hydrogen, oxygen, $SiCl_4$ gas, and an inert gas are injected from a burner 4 so as to generate a flame. The amounts of hydrogen and oxygen are adjusted in order that the temperature of the deposit surface of a glass particulate deposit body becomes 800°C or more, but 1,000°C or less. $SiCl_4$ gas becomes glass particulate material in an oxyhydrogen flame. This glass particulate material is blown onto the target rod at a high speed, thereby forming a glass particulate deposit body 5 having a bulk density around 0.3 g/cm$^3$ and an outer diameter of 150 mm.

The glass particulate deposit body 5 is cooled together with the target rod. The pin 3 is removed, and the extraction rod 2 is extracted from the glass particulate deposit body 5, leaving the glass rod 1 as it is with the glass particulate deposit body. In this manner, a hollow body 5a having a hole diameter of 20 mm is formed while the glass rod 1 remains on one end thereof. Preferably, the glass rod 1 is grasped without direct contact with the hollow body 5a during carrying thereof so that there is little likelihood of the glass particulate deposit body getting scratched or stained.

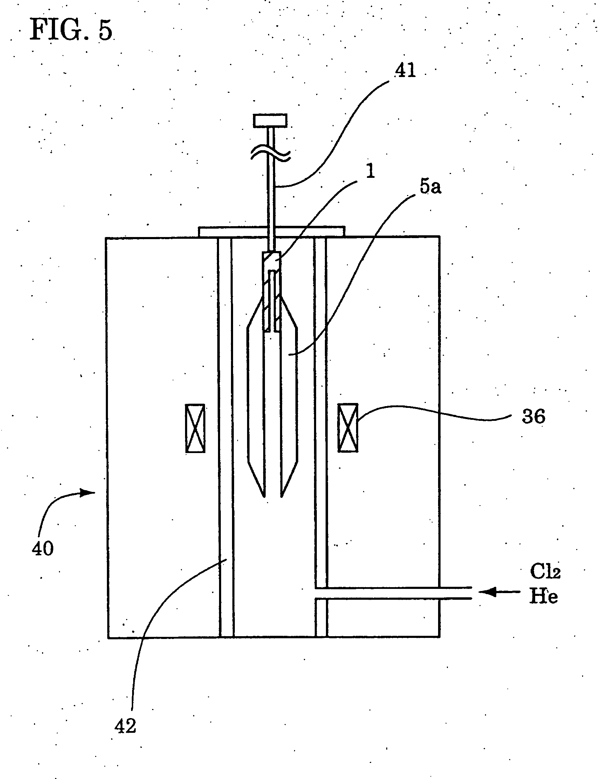

As shown in Fig. 5, the glass rod 1 is fixed to a carrier 41, the carrier 41 is moved, and thereby, the hollow body 5a is introduced into a furnace 40. The interior of a furnace muffle tube 42 is filled with an atmosphere of helium (He) containing 5.0 vol. % of $Cl_2$, and the hollow body 5a, which is carried from the top of the furnace 40 downward at a speed of 10 mm/min, is passed through a heater 36 heated at 1,000°C so that the hollow body 5a is dehydrated. Hydroxyl groups contained in the hollow body 5a are removed.

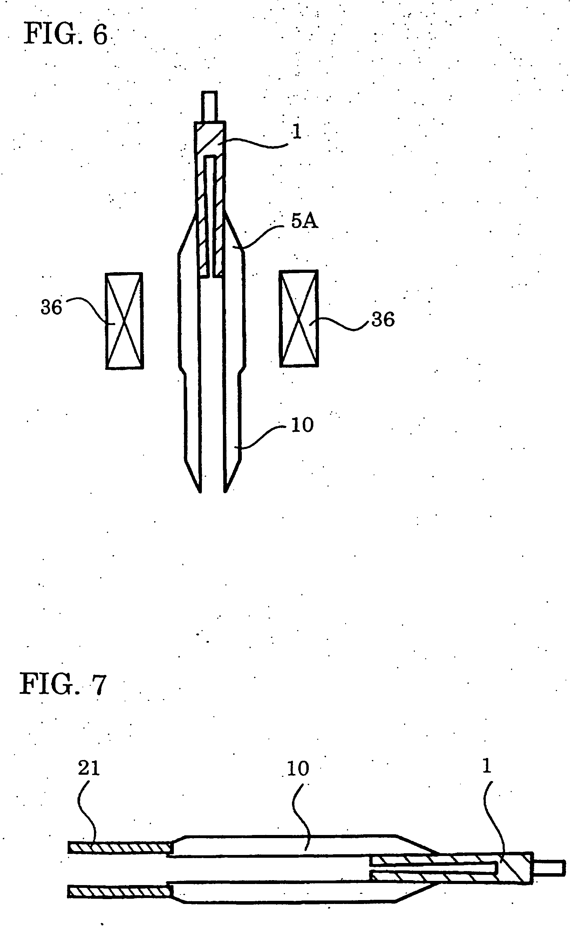

The supply of $Cl_2$ is stopped and He is simply supplied into the furnace 40 such that the interior of the furnace muffle tube 42 is filled with a He atmosphere. In such state, the hollow body 5a is pulled up. Next, the hollow body 5a is carried from the top of the furnace 40 downward at a speed of 10 mm/min, and is passed through a heater 36 heated at 1,500°C, so that the hollow body 5a is heated so as to be consolidated. As shown in Fig. 6, the hollow body 5a becomes transparent after passing through the heater 36 heated at 1,500°C, and a transparent tubular glass blank 10 having an inner diameter of 14 mm and an outer diameter of 60 mm is produced. The dehydration and the consolidation are not limited to be performed from the bottom of the hollow body upward. Another inert gas, e.g., argon or nitrogen, may be used in place of He. However, desirably, He is used during a consolidation step because a transparent glass blank can be produced.

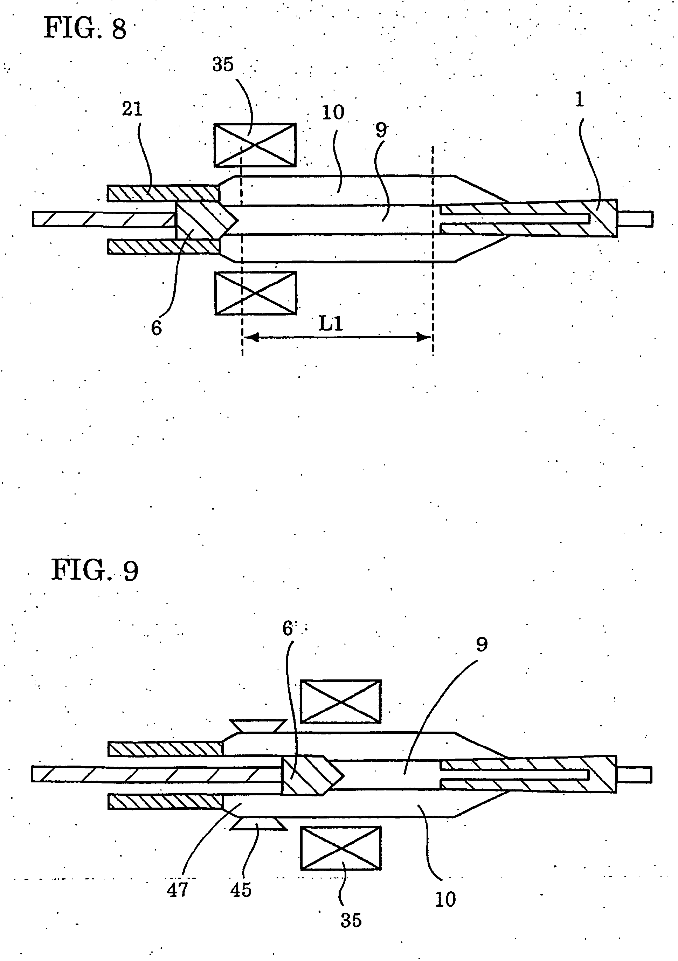

As shown in Fig. 7, a holding pipe 21 made of quartz glass and having an inner diameter on the order of 16 mm is connected to one end of the glass blank 10. Subsequently, grasping the glass rod 1 and the holding pipe 21 with chucks 27a and 27b respectively, a diameter expanding member 6 made of carbon and having an outer diameter of 16 mm is inserted from the holding pipe 21 side as shown in Fig. 8. The positions of a heater 35 and the glass blank 10 are adjusted in order that the heater 35 is located around the portion, with which the diameter expanding member 6 is brought into contact, of the glass blank 10. The heater 35 is heated to the temperature of 1,800°C to 2,700°C, and the temperature of the portion, with which the diameter expanding member 6 is brought into contact, of the glass blank 10 is made more than or equal to the softening point.

As shown in Fig. 9, the diameter expanding member and the glass blank are moved relative to each other such that the diameter-expanding member is moved linearly to the other end of the glass blank so as to penetrate through the hole of the glass blank. The heater 35 and the diameter-expanding member 6 are moved to the right, or alternatively, the glass blank 10 is moved to the left, as shown in Fig. 8. The three items may be moved. The distance between the heater 35 and the diameter-expanding member 6 is kept nearly constant. A softened glass blank is pushed by the diameter expanding member, the diameter of a hole 9 is expanded to the outer diameter of the diameter expanding member 6, and a glass tube 47 is manufactured. When the glass blank is made of pure silica glass, desirably, the heating is performed up to 2,100°C to 2,500°C. When the glass blank is heated to 2,200°C or more, it is particularly desirable that the glass blank 10 is supported with a molding member, e.g., a die 45, in the exterior of the diameter expanding member in order to produce a constant outer diameter of a manufactured glass tube 47, and to prevent the glass tube 47 from bending.

After completion of expansion of the hole in the glass blank, the end portions of the glass tube 47 are cut to remove the holding pipe 21 and the glass rod 1, allowing an effective portion length L1 of the glass tube 47 to remain, whereby the glass tube 47 is completed.

The eccentricity and the non-circularity of the glass tube produced in the manner as described above were determined. The eccentricity is defined as

$$\text{eccentricity (\%)} = (a - b) + \{(a + b)/2\} \times 100$$

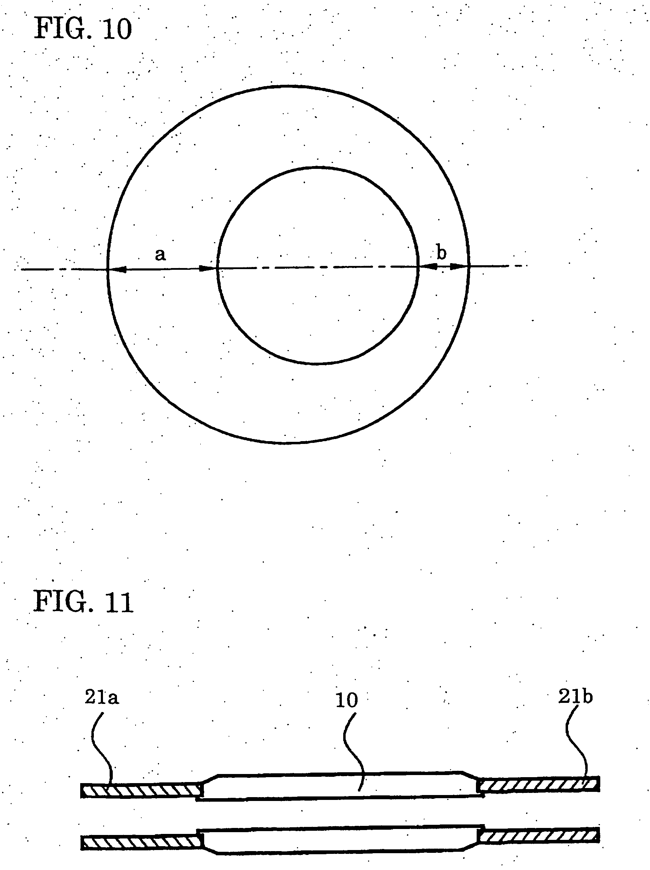

where the maximum thickness $a$ and the minimum thickness $b$ on a diameter of the glass tube, as shown in Fig. 10, were used. The non-circularity is defined as

$$\text{non-circularity (\%)} = (\text{major axis length - minor axis length}) + \{(\text{major axis}$$

$$\text{length + minor axis length})/2\} \times 100.$$

The glass tube formed by this method had an excellent eccentricity of 1.0% and an excellent non-circularity of 0.10% throughout its length. Furthermore, no flaw was formed on the interior surface of the hole.

This glass tube is cut to have an effective length of L1, and is used as a starting blank for an MCVD method. A plurality of glass layers containing germania ($GeO_2$) are formed on the interior surface of the glass tube by supplying $SiCl_4$, germanium tetrachloride and oxygen, and heating the starting blank to 1,600°C to 1,900°C. The refractive index of each layer is appropriately adjusted by differentiating the amount of addition of $GeO_2$ of the each layer, so that a glass tube having a desired refractive index profile is produced. This glass tube is collapsed to be a solid body so that a glass preform for an optical fiber is formed. This glass preform is drawn at a desired speed while being heated, and thereby, an optical fiber is produced. The value of the polarization mode dispersion (PMD) of the optical fiber produced by this method was an excellent 0.12 ps/km$^{1/2}$.

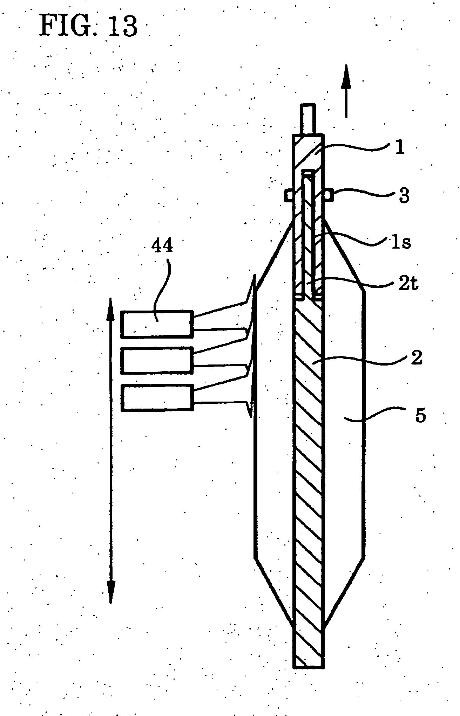

The OVD method may be used for depositing the glass particulate material on a target rod. As shown in Fig. 13, the target rod composed of the glass rod 1 and the extraction rod 2 is rotated about the axis thereof, and in addition, a burner 44 is made to reciprocate relative to the target rod in the axis direction of the target rod, so that glass particulate material is deposited on the target rod. For example, a glass particulate deposit body 5 having a bulk density around 0.5 g/cm$^3$ and an outer diameter of 150 mm is formed. Although a plurality of burners are shown in Fig. 13, one burner may be used. Other steps are performed to complete a glass tube in a manner similar to that in the case where the glass particulate deposit body is formed by the VAD method.

The eccentricity and the non-circularity of the glass tube formed by this method were determined. As a result, the glass tube formed by this method had an excellent eccentricity of 0.84% and excellent non-circularity of 0.08% throughout its length. The PMD of a single mode optical fiber produced from the glass preform formed from this glass tube by the MCVD method was an excellent 0.11 ps/km$^{1/2}$. Furthermore, no flaws were formed on the interior surface of the hole.

In the present embodiment, the rod made of carbon was used as the extraction rod. However, modification can be possible in accordance with the composition of the glass to be formed. Alumina, Zirconia, and the like can be applied as the blank for the rod.

SECOND EMBODIMENT

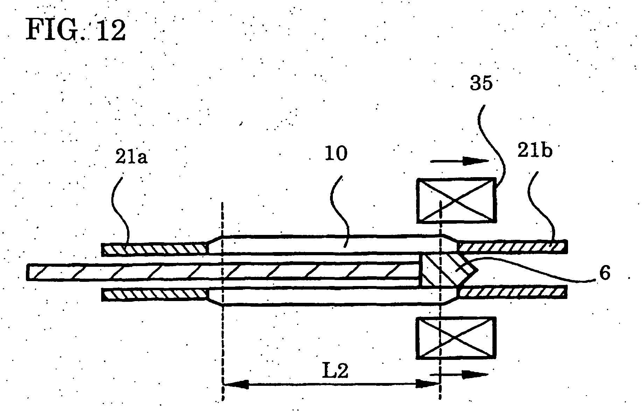

Steps up to the consolidation step are similar to those in the first embodiment. The glass rod 1 is extracted from the tubular glass blank, and, as shown in Fig. 11, holding pipes 21a and 21b are connected to both ends of the glass blank 10. All of the inner diameters of the holding pipes 21a and 21b and the outer diameter of the diameter expanding member 6 made of carbon are selected to be 16 mm. As shown in Fig. 12, the diameter-expanding member 6 is inserted into the hole of the glass blank 10 from a holding pipe 21a, and caused to penetrate to the other end thereof. The movements of the glass blank, the diameter-expanding member and the heater are similar to those in the first embodiment. Finally, both end portions of the glass tube are cut to remove the holding pipes such that an effective portion length L2 of the glass tube is ensured. According to this method, the portion where the glass rod remains in the glass blank in the case of the first embodiment can also be available for the effective portion length, and therefore, the glass blank can be effectively used.

THIRD EMBODIMENT

A glass particulate deposit body having a bulk density of 0.4 g/cm$^3$ and an outer diameter of 120 mm is formed in a manner similar to that in the OVD method in the first embodiment, except that $CF_4$ is simultaneously supplied when the glass particulate material is synthesized. Subsequently, a glass tube is formed in a manner similar to that in the first embodiment, except that the temperature after the clarification treatment is controlled to 1,450°C. The eccentricity and the non-circularity of the glass tube produced by this method were determined. The results were an excellent 0.75% and 0.31% respectively. The relative refractive index of the glass tube was lower than that of $SiO_2$ by 0.05%.

The refractive index of the glass can be reduced by the addition of $CF_4$. Since the glass particulate deposit body is formed by the OVD method in the present embodiment, a glass tube having a refractive index profile more complex than that in the first embodiment can be manufactured by adjusting the amount of added $CF_4$, or without the addition of $CF_4$, on a layer-to-layer basis.

FOURTH EMBODIMENT

The hollow body is put into a furnace, and hydroxyl groups are removed. Subsequently, the hollow body is kept at 1,300°C in an atmosphere of He containing $SiF_4$, and is made transparent at 1,450°C. The other steps are performed in a manner similar to that in the first embodiment, so that a glass tube is formed. The eccentricity and the non-circularity of the glass tube produced by this method were an excellent as 0.9% and 0.06%, respectively. The relative refractive index of the glass tube was lower than that of $SiO_2$ around 0.3% because of the addition of fluorine. The PMD of a single mode fiber produced from the glass preform formed from this glass tube by the MCVD method was 0.08 ps/km$^{1/2}$.

COMPARATIVE EXAMPLE 1

The shape of a hollow body formed in a manner similar to that in the first embodiment was measured. As a result, although the eccentricity was a satisfactory 1.1 %, the non-circularity was 3.1%. This hollow body was dehydrated, followed by consolidation, so that a tubular glass blank was produced. The glass blank was used as a starting material without further treatment. A glass layer containing a dopant, e.g. $GeO_2$, was formed on the interior surface of the glass blank by the MCVD method, and the glass blank was collapsed to be a solid body to produce an optical fiber preform. This optical fiber preform was drawn, and an optical fiber was produced. The PMD of the optical fiber was a large 0.25 ps/km$^{1/2}$, and therefore, this glass blank was not suited as a preform for the optical fiber. In the present comparative example, after the hollow body is consolidated so as to produce the tubular glass blank, expansion of the diameter of the hole while the temperature of the glass blank is made to be more than or equal to the softening point is not performed. Consequently, the non-circularity of the above-mentioned glass blank remained poor, and therefore, the glass blank was unsuitable as a preform for the optical fiber.

COMPARATIVE EXAMPLE 2

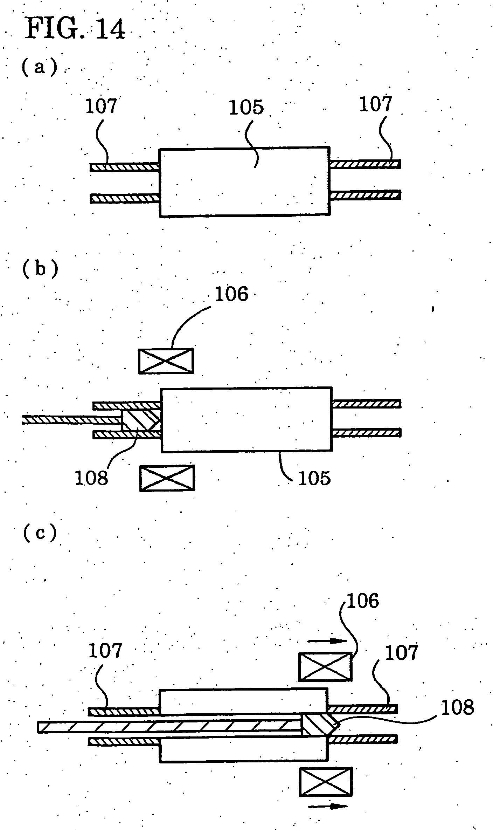

A solid glass ingot 105 having an outer diameter of 60 mm was prepared, and was equipped with holding pipes 107, as shown in Fig. 14(a). As shown in Fig. 14(b), a carbon drill 108 having an outer diameter of 16 mm was pressed against one end of the glass ingot 105, the glass ingot 105 was heated to be softened by a heater 106 at the portion which was in contact with the carbon drill 108, and the carbon drill 108 was pushed into the glass ingot while the glass ingot 105 was rotated. As shown in Fig. 14(c), the carbon drill 108 was penetrated to the other end of the glass ingot 105 such that the glass ingot 105 was bored to produce a tubular glass blank. The shape of the thus produced glass blank was measured. As a result, although the non-circularity was a satisfactory 0.6%, the eccentricity was 2.7%.

Using the glass blank as a starting blank without further treatment, an optical fiber was produced by performing the steps subsequent to the MCVD method in a manner similar to that in Comparative example 1. The PMD of the optical fiber was a large 0.29 ps/km$^{1/2}$, and therefore, this glass blank was unsuitable as a preform for the optical fiber.

In the above-mentioned Comparative example 1 and Comparative example 2, expansion of the diameter of the hole by the present invention was not performed with respect to the tubular glass blanks. Consequently, the non-circularity or the eccentricity of the above-mentioned glass blank remained poor in the respective cases, and therefore, the glass blank was unsuitable as a preform for the optical fiber. As is clear from comparisons between these embodiments and comparative examples as well, according to the method of the present invention, the non-circularity and the eccentricity are reduced by a large degree, and therefore, a glass tube having an extremely precise shape can be produced.

FIFTH EMBODIMENT

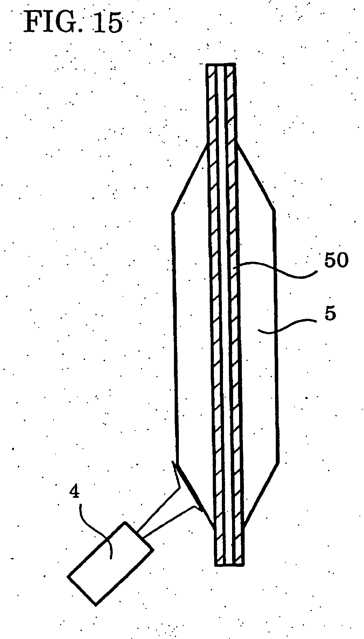

A glass particulate deposit body may be formed by depositing glass particulate material around a glass tube. The other steps are performed in a manner similar to that in the first embodiment, so that a glass tube is formed. For example, as shown in Fig. 15, a glass tube 50 which has an inner diameter of 11 mm and an outer diameter of 13 mm and which is made of synthetic silica glass containing 1 ppm or less of metal-based impurities is prepared as a starting blank. Glass particulate material is deposited around the glass tube 50 by the VAD method while 3 liters/minute of raw material gas ($SiCl_4$ gas), 40 liters/minute of hydrogen and 60 liters/minute of oxygen are supplied to a burner 4. For example, a glass particulate deposit body 5 having a bulk density around 0.25 g/cm$^3$ and an outer diameter of 150 mm is formed.

The other steps are performed in a manner similar to that in the first embodiment, and a glass blank 10 is formed by way of dehydration and consolidation steps in order that the hole diameter becomes 9 mm, and the outer diameter becomes 60 mm. Subsequently, the glass tube 50 is cut at both ends of the glass particulate deposit body 5, and holding pipes are connected thereto.

Setting the temperature of a heater 35 to 2,300°C, the glass blank 10 is heated at the portion around the diameter expanding member 6, and the diameter-expanding member 6 having a diameter of 16 mm is pushed into the glass blank 10 while being rotated to expand the hole 9. In this manner, the diameter of the hole is expanded from 9 mm to 16 mm. The eccentricity and the non-circularity of the glass tube 47 formed by this method were determined. As a result, the eccentricity was an excellent 0.75% and the non-circularity was an excellent 0.25% throughout the length.

When this glass tube is used as a starting blank for the MCVD method, in order to prevent the influence of OH groups and impurities contained therein, desirably chemical etching is performed beforehand to the extent that the hole diameter becomes about 17.4 mm. In the present embodiment, an example, in which the glass particulate material was deposited on the glass tube by the VAD method, is shown. However, the OVD method can also be applied.

SIXTH EMBODIMENT

A solid glass ingot having an outer diameter of 60 mm is prepared, and while it is heated by setting the temperature of the heater to 2,400°C, a carbon drill having an outer diameter of 5 mm is pushed into it. The other steps are performed in a manner similar to that in Comparative example 2, so that a tubular glass blank is formed. The hole diameter of the glass blank is expanded using the diameter expanding member having an outer diameter of 16 mm at a heater temperature of 2,300°C in a manner similar to the method used for expanding the diameter of the hole in the glass blank in the fifth embodiment, and a glass tube is manufactured.

The glass tube formed by this method had a non-circularity of 0.65% and eccentricity of 0.7%. When an optical fiber was formed from this glass tube, the PMD was an excellent 0.09 ps/km$^{1/2}$. In the sixth embodiment, the hole of the tubular glass blank formed in a manner similar to that in Comparative example 2 is expanded, and thereby, a glass tube having an excellent eccentricity can be manufactured. The PMD of the optical fiber produced using the glass tube for a preform is excellent.

SEVENTH EMBODIMENT

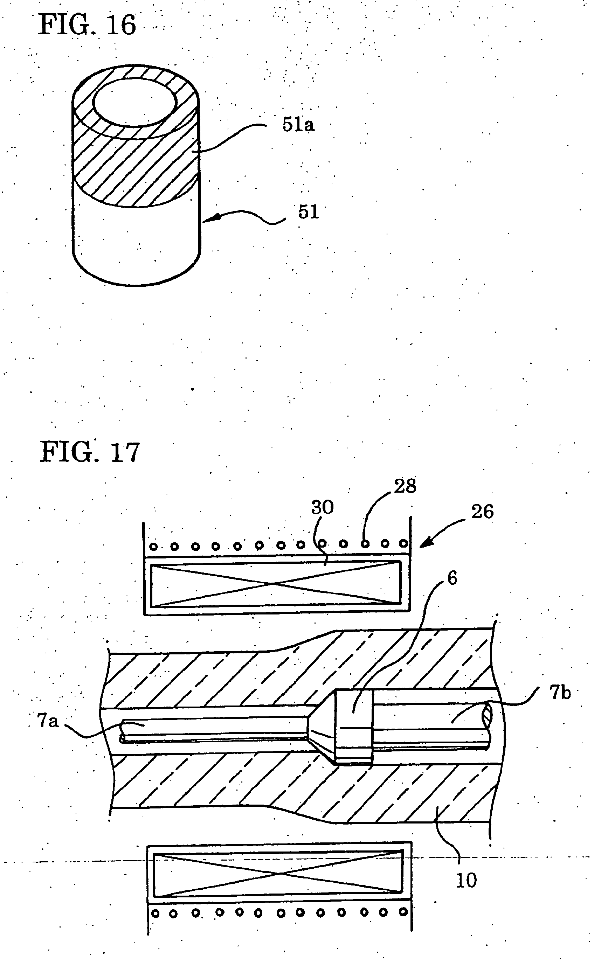

A pure silica glass rod is bored with a borer. A tool usable in the borer is a tool 51 shown in Fig. 16, which is a metal cylinder having an end portion 51a provided with a diamond coating and which is brought into contact with the rod, while being rotated, so as to bore, or a tool (not shown in the drawing) which generates ultrasonic oscillation from its end portion so as to bore. A hole having a diameter of 5 mm is formed with a borer in a pure silica glass rod having an outer diameter of 60 mm, so that a tubular glass blank is produced. Subsequently, in a manner similar to that in the sixth embodiment, a diameter-expanding member is rotated and is inserted through the hole while the glass blank is heated, so that the hole diameter is expanded to 16 mm. The eccentricity and the non-circularity of the glass tube produced by this method were measured. The results were an excellent 0.87% and 0.35% respectively.

EIGHTH EMBODIMENT

In the eighth embodiment, both end portions of a diameter-expanding member are supported. In an apparatus according to the present embodiment, the glass blank 10 is successively heated with a heating device 26 as shown in Figs. 3 and 17. The hole diameter of the glass blank 10 is expanded by pressing the diameter-expanding member 6 against the softened portion of the glass blank. This diameter expanding member 6 is connected to a front-end support member 7a and rear-end support member 7b for supporting the front-end center and other end side of the diameter expanding member 6, respectively. Subsequently, the expansion of the diameter of the hole is performed while the glass blank 10 is rotated at 10 rpm, and the diameter expanding member 6 is rotated at 5 rpm together with the front-end support member 7a and the rear-end support member 7b in the same rotational direction as the glass blank 10.

This apparatus is provided with the heating device 26 including an inlet-side base 24a, an outlet-side base 24b, and a heater support 23 located therebetween for supporting a heater 30. The ends of these front-end support member 7a and rear-end support member 7b are rotatably fixed to an inlet-side fixing member 20a and an outlet-side fixing member 20b respectively. These inlet-side fixing member 20a and outlet-side fixing member 20b are fixed to the inlet-side base 24a and the outlet-side base 24b respectively. Both ends of the glass blank 10 are fixed to respective fixing members 22a and 22b through respective holding pipes 21a and 21b.

A device for moving the diameter expanding member 6 relative to the glass blank 10 may be designed such that the fixing members 22a and 22b move in synchronization with each other on the bases 24a and 24b by means of respective motors or the like. The fixing members 22a and 22b may be moved by a mechanism in which ball screws are provided along the bases, and screw holes are provided in the fixing members 22a and 22b so as to be thread-engaged with the ball screws, which are rotated by a motor or the like.

The holding pipe 21b on the rear-end side of the diameter-expanding member is fixed to the fixing member 22b through a chuck 27. The holding pipe 21a on the front-end side of the diameter-expanding member is fixed to the fixing member 22a through a chuck 27. The chuck 27a and the chuck 27b are connected to motors (not shown in the drawing), and are synchronously rotated. The glass blank 10 is rotated at the above-mentioned rotational speed according to the rotation caused by the chucks and transferred through the holding pipes. On the other hand, the fixing member 20a on the inlet-side and the fixing member 20b on the outlet-side are provided with motors (not shown in the drawing), and cause, through the front-end support member 7a and the rear-end support member 7b, the diameter expanding member 6 to rotate.

The heating device 26 shown in Figs. 3 and 17 is of an inductive heating type, and includes a heater 30 made of carbon, arranged around the glass blank 10. A resistance heating type may be used for the heating device 26. A coil 28 is arranged around the heater 30. The heater 30 is inductively heated by a current passing through the coil 28.

A method of making a glass tube (silica glass tube) having a desired hole diameter by using this apparatus will be described. The glass blank 10 and the diameter expanding member 6 are selected in order that the ratio of the outer diameter of the diameter expanding member 6 to the outer diameter of the glass blank 10 becomes around 0.5.

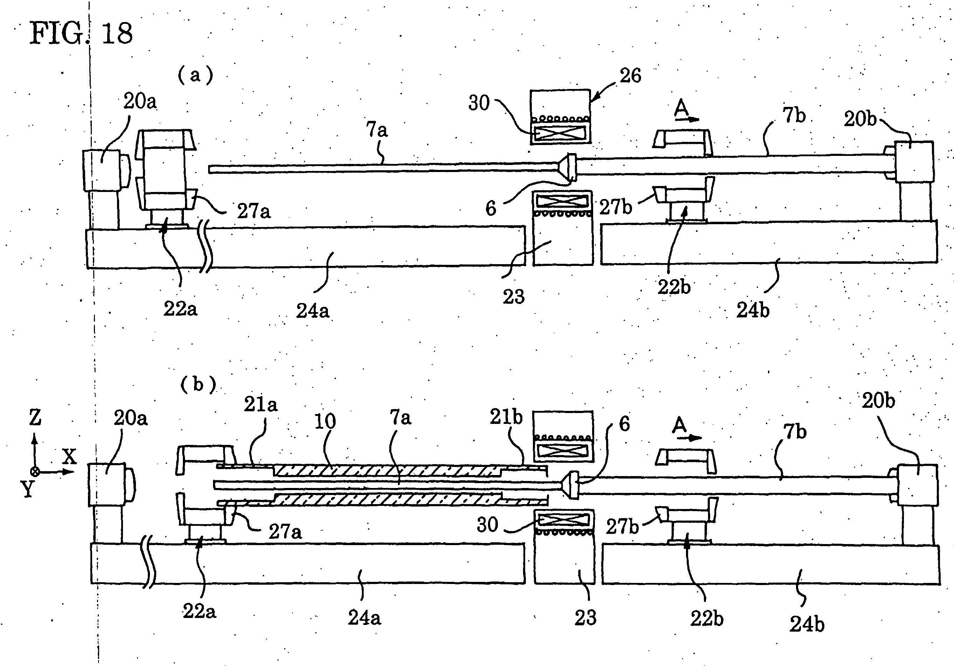

As shown in Fig. 18(a), the end of the rear-end support member 7b is fixed to the outlet-side fixing member 20b fixed to the outlet-side base 24b. At this time, each of the fixing member 22a and the inlet-side fixing member 20a on the inlet-side base 24a are moved to the left end of the inlet-side base 24a. Although the fixing member 22b is arranged on the start-of-diameter-expansion position on the outlet-side base 24b, the chuck 27b is maintained in the state of being opened, and the rear-end support member 7b is penetrated therethrough.

As shown in Fig. 18(b), one end of the holding pipe 21a is fixed to the fixing member 22a through the chuck 27a, and the fixing member 22a is moved from the end side of the front-end support member 7a toward the direction indicated by an arrow A. When the end of the holding pipe 21b reaches the position of the chuck 27b, adjustment of the height is performed in order that the glass blank 10 becomes level, and the holding pipe 21b is fixed to the chuck 27b of the fixing member 22b.

At this time, the front-end support member 7a penetrates through the hole of the glass blank. The inlet-side fixing member 20a is moved to the end of the front-end support member 7a. The inlet-side fixing member 20a is configured to be movable in three directions of the X, Y and Z orthogonal coordinates shown in Fig. 18(b). The position of the inlet-side fixing member 20a is finely adjusted in order that the center axis of the glass blank 10 coincides with that of the front-end support member 7a and the rear-end support member 7b, and the front-end support member 7a is fixed to the inlet-side fixing member 20a. The diameter expanding member 6, the front-end support member 7a, and the rear-end support member 7b are fixed to each other in the state in which they are highly precisely positioned to make their center axes coincide.

In this example, the glass blank was fixed, and thereafter, the position of the diameter-expanding member was adjusted in accordance with the center axis of this glass blank. However, conversely, the diameter-expanding member may be fixed, and then the glass blank and the diameter-expanding member may be fixed, adjusting their position so that they are coaxially maintained.

Subsequently, the heating device 26 is activated, the diameter expanding member 6 is brought into contact with the end portion of the glass blank 10, and the vicinity of the contact region is heated to 2,300 °C. The motors are driven, and thereby, the glass blank 10 and the diameter-expanding member 6 are coaxially rotated at 10 rpm and 5 rpm respectively. In addition, the fixing members 22a and 22b are moved in the direction indicated by the arrow A at respective desired speeds.

In this manner, the glass blank 10 is heated by the heating device 26 while being rotated, and thereby, is softened, so that the diameter of the hole therein is gradually expanded with the diameter expanding member 6, as shown in Fig. 17. Finally, the holding pipes 21a and 21b are removed, and a glass tube is completed.

According to the above-mentioned method, since the diameter expanding member 6 is supported at its front-end side as well, and therefore, is of a so-called both end supported type, highly precise alignment of the center of the diameter expanding member and the center of the tubular glass blank which is the starting material can be achieved. The position of the diameter expanding member can therefore be maintained precisely without substantial deviation of position thereof, which may be caused due to the bending or vibration of the support member during expansion of the diameter of the hole of the glass blank. In this manner, a hole having small non-circularity can be formed. Furthermore, the glass tube having a small eccentricity can be produced with excellent reproducibility.

It is essential that the front-end support member is smaller than the hole diameter of the glass blank, and the rear-end support member is smaller than or equal to the maximum diameter of the diameter expanding member. These support members may have a multi-component configuration in place of a single-component configuration. For example, if the front-end support member composed of three pieces whose respective cross-sectional centers constitute a shape of an equilateral triangle is used, positioning can be more easily performed. Hollow support members may be used instead of solid members as the support members.

As illustrated by an enlarged sectional view shown in Fig. 21, the diameter expanding member 6 and the front-end support member 7a may be formed such that they can be attached to and be detached from each other. For example, a configuration in which a screw thread portion 62 formed protruding at the end portion of the front-end support member 7a is screw-engaged with a screw hole 61 formed in the diameter expanding member 6 may be adopted. In this case, since the front-end support member 7a can be inserted through the glass blank 10 and screw-engaged with the screw hole 61 formed in the front end portion of the diameter expanding member 6 after the glass blank is fixed to the chuck 27, it is easy to insert the front-end support member through the glass blank.

The front-end support member is not limited to the rod-shaped member. A string, which is attached to a hole formed in the tip surface of the diameter expanding member, may be drawn to regulate the position of the tip side of the diameter expanding member.

NINTH EMBODIMENT

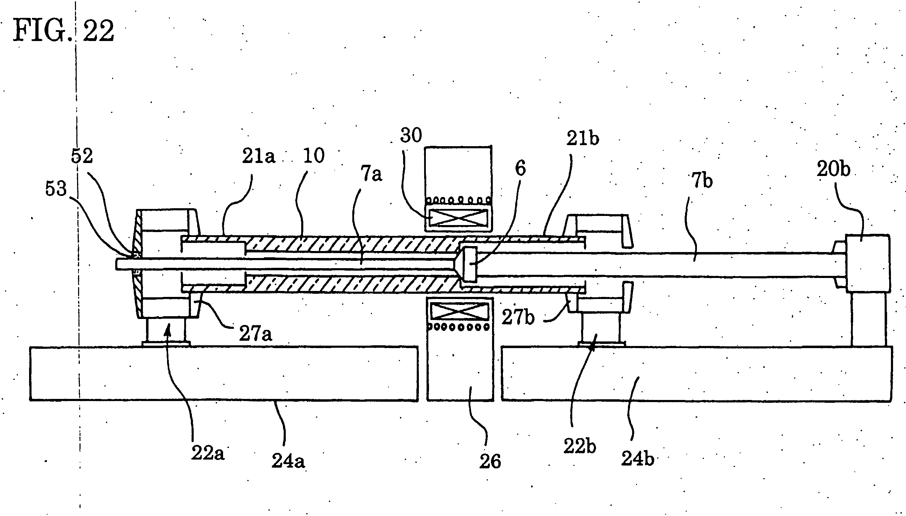

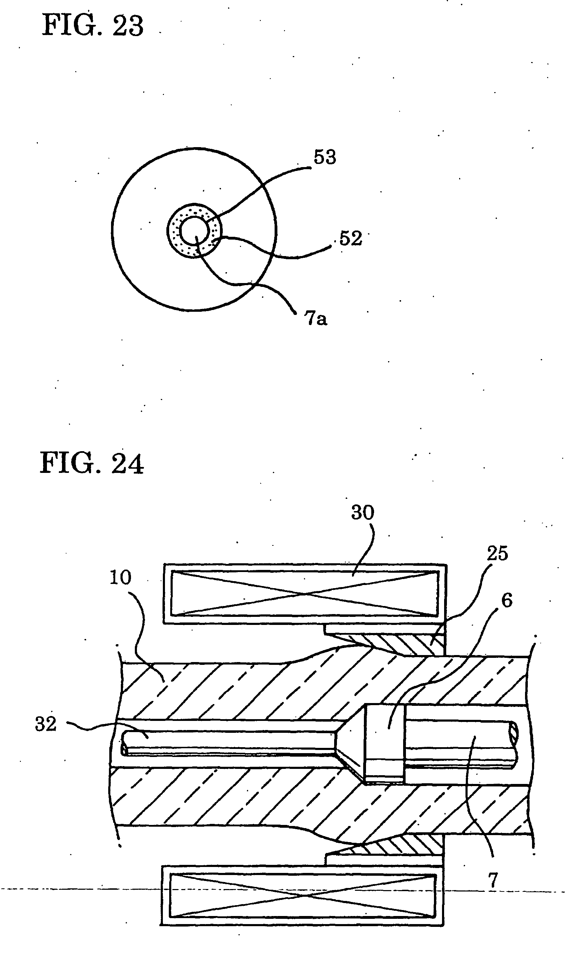

In the eighth embodiment, the end of the front-end support member 7a is fixed with the inlet-side fixing member 20a. However, instead of the inlet-side fixing member 20a, a sliding member 52 having a guide hole 53 therein may be provided in the fixing member 22a as shown in Figs. 22 and 23, and thereby the position may be regulated simply in the axis direction. When the diameter-expanding member 6 is rotated, a rotation force is simply imparted to the outlet-side fixing member 20b. In accordance with the rotation of the outlet-side fixing member 20b, the front-end support member 7a is rotated while being in contact with the sliding member 52. According to such a configuration, since no additional fixing member for supporting the front-end support member 7a is provided separately, the number of members is reduced, and the configuration is simplified.

TENTH EMBODIMENT

In the eighth or ninth embodiment, expansion of the diameter is performed simply from the interior. However, as shown in Fig. 24, a molding member 25 may be provided on the exterior of the softened region in order that the outer diameter of the glass tube blank is regulated. In the present embodiment, the molding member 25 is attached to the interior of the heater 30 of the heating device. The softened region is not necessarily limited to the region at which the temperature is more than or equal to the softening point, and it may be where the glass blank is softened to the extent of being brought into a deformable state. According to the present embodiment, a glass tube having a small eccentricity can be formed in particular because the outer diameter is controlled.

The present invention can be applied not only in the case where the diameter of the hole located at the center of the glass blank is expanded, but also in the case where the diameter of the hole located at a position other than the center of the glass tube blank, e.g. a hole for insertion of a stress application member of a polarization maintaining fiber, is expanded. In this case, the eccentricity can be defined based on the deviation D of the practical center of the hole from the targeted center of the hole in place of the definition described in Fig. 10. For example, when the diameter of the targeted hole is denoted by d, the eccentricity may be represented by D/d.

(EXAMPLE 1)

A silica glass column was formed by a VAD method, a hole was bored with a borer, and thereby, a tubular glass blank having an outer diameter of 70 mm and an inner diameter of 15 mm was manufactured. A holding pipe having an outer diameter of 70 mm and an inner diameter of 45 mm was connected to the glass blank by fusing, and this was set in an apparatus for making a glass tube shown in the eighth embodiment (refer to Fig. 3). Here, a diameter-expanding member 6 having a maximum diameter of 35 mm was used.

A heating device was activated, the diameter-shrinking portion of the diameter expanding member 6 was brought into contact with one end surface of the glass blank 10, and the vicinity of the contact region was heated to 2,300°C. The diameter expanding member 6 was brought into contact with the glass blank, and the fixing members 22a and 22b were moved in the direction indicated by an arrow A while the diameter of the hole was expanded, whereby a glass tube having an outer diameter of 75 mm and an inner diameter of 35 mm was formed.

Ten glass tubes were manufactured by this method. The thickness distribution of these glass tubes were measured with an ultrasonic measuring apparatus in the circumferential direction and the longitudinal direction, and the eccentricity and the standard deviation of the thickness distribution were determined by calculation, and their respective averages were determined with respect to the ten glass tubes. As a result, the average value of the eccentricity was 0.80%. The average value σ of the standard deviation of the thickness distribution was 0.10 mm.

(EXAMPLE 2)

Ten glass tubes were manufactured in a manner similar to that in Example 1, except that two carbon plates arranged parallel to each other with a spacing of 70 mm as molding members 25 were attached to the interior wall of the heater as shown in Fig. 24. The thickness distribution of these glass tubes were measured with an ultrasonic measuring apparatus in the circumferential direction and the longitudinal direction, the eccentricity and the standard deviation of the thickness distribution were determined by calculation, and their respective averages were determined with respect to the ten glass tubes. As a result, the average value of the eccentricity was 0.73%. The average value σ of the standard deviation of the thickness distribution was 0.08 mm.

(EXAMPLE 3)

Ten glass tubes having an outer diameter of 75 mm and an inner diameter of 35 mm were manufactured in a manner similar to that in Example 1 except that a diameter expanding member 6 was of a cantilever type, without the front-end support member 7a. The thickness distribution of these glass tubes was measured with an ultrasonic measuring apparatus in the circumferential direction and the longitudinal direction, and the eccentricity and the standard deviation of the thickness distribution were determined by calculation. Their respective averages were determined with respect to the ten glass tubes. As a result, the average value of the eccentricity was 2.33%. The average value σ of the standard deviation of the thickness distribution was 0.50 mm.

As is clear from comparisons between Example 1 and Example 3, the variation in the thickness was reduced by 80% in the case where the expansion of the diameter was performed by the both end supported type. As is clear from comparison between Example 2 and Example 3, the variation in the thickness was reduced by 84% in the case where the expansion of the diameter was performed by the both end supported type while the outer diameter was controlled by the die. In Example 3, the eccentricity is larger than that of the example in the first embodiment since the outer diameter of the glass blank and the diameter of the hole of the glass tube manufactured are larger than those in the first embodiment. However, the eccentricity is smaller than that in Comparative example 2.

The entire disclosure of Japanese Patent Applications No. 2002-009231 (filed on January 17, 2002), No. 2002-22444 (filed on January 30, 2002), No. 2002-22566 (filed on January 30, 2002), No. 2002-28779 (filed on February 5, 2002), No. 2002-115432 (filed on April 17, 2002), No. 2002-201174 (filed on July 10, 2002), No. 2002-201861 (filed on July 10, 2002), and No. 2002-233926 (filed on August 9, 2002) including specification, claims drawings and summary are incorporated herein by reference in its entirely.

Industrial Applicability

As described above, according to the method of the present invention, the eccentricity of the hole of the glass tube is reduced, and a high-quality glass tube having a cross section extremely close to a perfect circle can be produced. Since the diameter-expanding member is not overloaded, breakage of the diameter expanding member or the glass tube does not occur.

**Claims**

1. A method of making a glass tube, comprising the step of
    inserting a diameter expanding member through a hole in a tubular glass blank and expanding the diameter of the hole while the temperature of the glass blank is controlled to be more than or equal to the softening point.

2. A method of making a glass tube according to Claim 1, wherein said tubular glass blank is made by
    depositing glass particulate material around a target rod so as to form a glass particulate deposit body,
    extracting the target rod out of the glass particulate deposit body so as to form a hollow body, and
    consolidating the hollow body.

3. A method of making a glass tube according to Claim 1, wherein said tubular glass blank is made by depositing glass particulate material around a glass tube so as to form a glass particulate deposit body and consolidating the glass particulate deposit body.

4.  A method of making a glass tube according to Claim 1, wherein said tubular glass blank is made by boring a glass rod.

5.  A method of making a glass tube according to any one of Claims 1 to 4, wherein a holding pipe is connected to at least one end of the tubular glass blank, and the diameter of the hole in the glass blank is expanded while the glass blank is supported with the holding pipe.

6.  A method of making a glass tube according to any one of Claims 2, 3, and 5, wherein a compound containing fluorine is added to the glass particulate deposit body.

7.  A method of making a glass tube according to Claim 1, wherein the diameter of the hole in the glass blank is expanded while at least the rear end of the diameter expanding member is supported.

8.  A method of making a glass tube according to Claim 7, wherein the diameter of the hole in the glass blank is expanded while both ends of the diameter expanding member are supported.

9.  A method of making a glass tube according to any one of Claims 1 to 8, wherein the diameter of the hole in the glass blank is expanded while the glass blank is supported from the exterior.

10. A method of making a glass tube according to any one of claims 1 to 9, wherein the diameter expanding member is composed of a tapered front-end portion and a cylindrical or columnar portion having a constant outer diameter, the method further comprising the step of cooling the glass blank to the temperature at which the cross-sectional shape of the glass blank is self-sustained while the glass blank is in contact with the cylindrical portion or the columnar portion.

11. A method of making a glass tube according to any one of claims 1 to 10, wherein the diameter expanding member is supported with a support member including a shrinking portion whose outer diameter gradually decreases as distanced farther from the diameter expanding member.

12. A method of making a glass tube according to any one of claims 1 to 11, wherein an alignment concavity configured so as to be able to guide the diameter expanding member to a predetermined position is provided on the end surface of the tubular glass blank, and expansion of the diameter of the hole in the glass blank is started in the state in which the diameter expanding member is engagedly in contact with the concavity.

13. An apparatus for manufacturing a glass tube, comprising a heating member for heating a glass blank from a circumference thereof, a diameter expanding member capable of being inserted through the glass blank, support members supporting both ends of the diameter expanding member, and a device for moving the diameter expanding member relative to the glass blank so as to insert the diameter expanding member through a hole in the glass blank.

# FIG. 1

FIG. 2

FIG. 3

## FIG. 4

FIG. 5

FIG. 6

FIG. 7

## FIG. 8

## FIG. 9

FIG. 10

FIG. 11

21a          10          21b

**FIG. 12**

FIG. 13

# FIG. 14

(a)

107      105      107

(b)

106

108      105

(c)

106

107      107

108

FIG. 15

FIG. 16

FIG. 17

FIG. 18

(a)

(b)

EP 1 394 124 A1

EP 1 394 124 A1

FIG. 19

6

60    7

θ    m

FIG. 20

P    Q

6

θ    m

60    7

FIG. 21

7a    61    6

62

28

FIG. 22

EP 1 394 124 A1

## FIG. 23

## FIG. 24

FIG. 25

EP 1 394 124 A1

## INTERNATIONAL SEARCH REPORT

| International application No. |
|---|
| PCT/JP03/00239 |

| A. CLASSIFICATION OF SUBJECT MATTER |
|---|
| Int.Cl⁷ C03B23/045 |

According to International Patent Classification (IPC) or to both national classification and IPC

| B. FIELDS SEARCHED |
|---|
| Minimum documentation searched (classification system followed by classification symbols) |
| Int.Cl⁷ C03B23/04-23/18 |

Documentation searched other than minimum documentation to the extent that such documents are included in the fields searched

| Jitsuyo Shinan Koho | 1926-1996 | Toroku Jitsuyo Shinan Koho | 1994-2003 |
|---|---|---|---|
| Kokai Jitsuyo Shinan Koho | 1971-2003 | Jitsuyo Shinan Toroku Koho | 1996-2003 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 3-247525 A (Nippon Sekiei Glass Co., Ltd.), 05 November, 1991 (05.11.91), Page 1; Claims (Family: none) | 1-13 |
| A | JP 62-162632 A (Sumitomo Electric Industries, Ltd.), 18 July, 1987 (18.07.87), Page 1; Claims; page 2, upper left column, line 18 to upper right column, line 6 (Family: none) | 1-13 |
| A | JP 10-101352 A (Shin-Etsu Quartz Products Co., Ltd), 21 April, 1998 (21.04.98), Page 2, column 1; Claims (Family: none) | 1-13 |

| ☐ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 April, 2003 (02.04.03) | 15 April, 2003 (15.04.03) |

| Name and mailing address of the ISA/ | Authorized officer |
|---|---|
| Japanese Patent Office | |
| Facsimile No. | Telephone No. |

Form PCT/ISA/210 (second sheet) (July 1998)